# EUROPÄISCHE PATENTANMELDUNG

(11) **EP 3 741 479 A1**
(43) Veröffentlichungstag der Anmeldung: **25.11.2020**
(21) Anmeldenummer: 19175905.9
(22) Anmeldetag: 22.05.2019
(51) Int. Cl.: B22F 3/105, B33Y 10/00, B33Y 30/00, B33Y 40/00, B29C 64/153, B29C 64/20

(54) **VORRICHTUNG UND VERFAHREN ZUR ADDITIVEN FERTIGUNG VON BAUTEILEN**

(71) Anmelder: Siemens Aktiengesellschaft, 80333 München (DE)
(72) Erfinder: Hofacker, Oliver, 14199 Berlin (DE); Krüger, Ursus, 14089 Berlin (DE)

(57) **Zusammenfassung**

Die Erfindung betrifft eine Vorrichtung zur additiven Fertigung von Bauteilen. Die Vorrichtung weist eine Prozesskammer und eine Plattform auf, auf welcher in der Prozesskammer ein Pulverbett aus einem pulverförmigen Ausgangsmaterial zum Herstellen des jeweiligen Bauteils ausgebildet werden kann. Die Vorrichtung umfasst außerdem eine in der Prozesskammer angeordnete Saugeinrichtung, durch welche während des Herstellens des jeweiligen Bauteils zumindest ein Teil des das Pulverbett bildenden pulverförmigen Ausgangsmaterials absaugbar ist.

## Beschreibung

Die Erfindung betrifft eine Vorrichtung und ein Verfahren zur additiven Fertigung von Bauteilen.

Additive Fertigungsverfahren zum additiven Fertigen sowie Vorrichtungen zum Durchführen von solchen additiven Fertigungsverfahren sind aus dem allgemeinen Stand der Technik bereits bekannt. Das jeweilige additive Fertigungsverfahren wird auch als generatives Fertigungsverfahren, additive Fertigung oder generative Fertigung bezeichnet, sodass das jeweilige Bauteil generativ gefertigt wird. Hierbei wird das jeweilige Bauteil beispielsweise schichtweise, das heißt Schicht für Schicht hergestellt. Dies bedeutet, dass jeweilige Schichten hergestellt und jeweils zumindest teilweise aufeinander angeordnet und miteinander verbunden werden, sodass das jeweilige Bauteil aus den Schichten und somit schichtweise beziehungsweise Schicht für Schicht hergestellt wird. Um die jeweilige Schicht herzustellen, wird beispielsweise ein einfach auch als Pulver bezeichnetes, pulverförmiges Ausgangsmaterial verwendet und mit wenigstens einem beispielsweise als Laserstrahler ausgebildeten Energiestrahl beaufschlagt und dadurch erwärmt. Dadurch werden zunächst lose, das heißt zunächst nicht miteinander verbundene Partikel des Pulvers miteinander verbunden, wodurch die jeweilige Schicht hergestellt wird. Somit wird das jeweilige Bauteil aus dem Pulver hergestellt.

Aufgabe der vorliegenden Erfindung ist es, eine Vorrichtung und ein Verfahren zu schaffen, sodass wenigstens ein Bauteil besonders einfach und somit besonders zeit- und kostengünstig additiv gefertigt werden kann.

Diese Aufgabe wird durch die Gegenstände der unabhängigen Ansprüche gelöst. Vorteilhafte Ausgestaltungen mit zweckmäßigen Weiterbildungen der Erfindung sind in den übrigen Ansprüchen angegeben.

Ein erster Aspekt der Erfindung betrifft eine auch als Anlage, Fertigungsanlage oder Fertigungsvorrichtung bezeichnete Vorrichtung zur additiven Fertigung von Bauteilen. Hierzu weist die Vorrichtung eine Prozesskammer und eine Plattform auf, auf welcher in der Prozesskammer ein Pulverbett aus einem pulverförmigen Ausgangsmaterial zum Herstellen des jeweiligen Bauteils ausbildbar ist. Das pulverförmige Ausgangsmaterial wird auch einfach als Pulver bezeichnet und umfasst, insbesondere lose, das heißt nicht miteinander verbundene, Partikel. Die Partikel werden in losem, das heißt noch nicht miteinander verbundenem Zustand auf die auch als Tisch bezeichnete Plattform aufgebracht, wodurch auf der Plattform das Pulverbett ausgebildet beziehungsweise hergestellt wird. Dabei wird das jeweilige Bauteil aus dem das Pulver bildenden Pulver hergestellt. Hierzu wird beispielsweise ein Energiestrahl, insbesondere ein Laserstrahl, auf zumindest einen Teil des Pulverbetts gestrahlt, sodass zumindest ein Teil des das Pulverbett bildenden Pulvers, das heißt zumindest ein Teil der das Pulverbett bildenden und zunächst losen Partikel mit dem Energiestrahl beaufschlagt und dadurch erwärmt werden. Hierdurch werden in die zunächst losen, das heißt nicht miteinander verbundenen Partikel miteinander verbunden. Beispielsweise werden die Partikel durch das Erwärmen geschmolzen, insbesondere an- und/oder aufgeschmolzen, und dadurch miteinander verbunden. Ferner ist es denkbar, dass die Partikel durch das Erwärmen miteinander verbacken und dadurch miteinander verbunden werden.

Durch die Vorrichtung ist beziehungsweise wird das Bauteil beispielsweise schichtweise, das heißt Schicht für Schicht herstellbar beziehungsweise hergestellt. Hierzu wird beispielsweise aus einem ersten Teil des Pulvers beziehungsweise aus ersten der Partikel eine erste Schicht hergestellt, insbesondere derart, dass die ersten Partikel auf die beschriebene Weise erwärmt und dadurch miteinander verbunden werden. Daraufhin wird die Plattform beispielsweise abgesenkt, insbesondere in vertikaler Richtung nach unten. Insbesondere wird hierbei die Plattform einen Weg abgesenkt, der einer Dicke der hergestellten Schicht entspricht. Daraufhin wird beispielsweise auf der Plattform ein zweiter Teil des Pulvers unter Ausbildung eines beziehungsweise des Pulverbetts angeordnet, sodass auf der abgesenkten Plattform und somit beispielsweise auf der hergestellten und auch als erste Schicht bezeichneten Schicht zweite der Partikel angeordnet werden. Die zweiten Partikel sind zunächst Lose, das heißt nicht miteinander verbunden und werden dann mit dem Energiestrahl beaufschlagt und dadurch erwärmt und somit miteinander verbunden. Hierdurch wird aus den zweiten Partikeln eine zweite Schicht hergestellt, wobei die zweite Schicht auf der Plattform und dabei zumindest teilweise auf der ersten Schicht hergestellt wird. Dabei werden die Schichten miteinander verbunden, insbesondere durch das Erwärmen der zweiten Partikel. Auf diese Weise können mehrere Schichten hergestellt und zumindest teilweise aufeinander angeordnet und miteinander verbunden werden, wodurch das Bauteil aus den Schichten hergestellt werden kann. Insgesamt ist erkennbar, dass durch die Vorrichtung, das heißt mithilfe der Vorrichtung ein pulverbettbasiertes additives Fertigungsverfahren durchgeführt werden kann, durch welches das jeweilige Bauteil, insbesondere schichtweise, hergestellt werden kann.

Um dabei das jeweilige Bauteil auf besonders einfache und somit zeit- und kostengünstige Weise herstellen zu können, umfasst die Vorrichtung eine, insbesondere während des Herstellens des jeweiligen Bauteils, in der Prozesskammer angeordnete Saugeinrichtung, durch welche während des Herstellens des jeweiligen Bauteils zumindest ein Teil des das Pulverbett bildenden Pulvers, insbesondere von der Plattform und/oder aus wenigstens einer Kavität des unvollständig hergestellten, das heißt des noch nicht vollständig hergestellten Bauteils, absaugbar ist. Unter dem Merkmal, dass durch die in der Prozesskammer angeordnete Saugeinrichtung zumindest ein Teil des das Pulverbett bildenden Pulvers und somit zumindest ein Teil der das Pulverbett bildenden und losen Partikel während des Herstellens des jeweiligen Bauteils absaugbar ist, ist insbesondere zu verstehen, dass durch die Vorrichtung zumindest der Teil des das Pulverbett bildenden Pulvers vor Fertigstellung des Bauteils, das heißt vor Ende der Herstellung des Bauteils absaugbar ist beziehungsweise abgesaugt wird. Wieder mit anderen Worten ausgedrückt ist es durch die Saugeinrichtung möglich, zumindest ein Teil des das Pulver bildenden Pulvers in unvollständig hergestelltem Zustand des Bauteils und insbesondere dann abzusaugen, während sich das Bauteil auf der Plattform befindet.

Unter der Prozesskammer ist vorzugsweise nicht etwa ein durch ein Gebäude gebildeter Raum insgesamt zu verstehen, in welchem die Vorrichtung während der Herstellung des jeweiligen Bauteils angeordnet ist, sondern die Prozesskammer ist Bestandteil der Vorrichtung. Dies bedeutet, dass die Prozesskammer zur Vorrichtung gehört und nicht etwa ein die Vorrichtung insgesamt umgebender und beispielsweise durch ein separat von der Vorrichtung ausgebildetes Gebäude begrenzter Raum ist. Mit anderen Worten ist hierunter insbesondere zu verstehen, dass dann, wenn sich die Vorrichtung während des Herstellens des Bauteils in einem beispielsweise durch ein separat von der Vorrichtung ausgebildetes Gebäude begrenzten Raum befindet, die Prozesskammer von dem Raum an sich, insbesondere zumindest teilweise, zumindest überwiegend oder vollständig, abgetrennt ist. Wieder mit anderen Worten ausgedrückt ist die Prozesskammer ein durch die Vorrichtung, das heißt durch wenigstens ein Bauelement der Vorrichtung begrenzter Raum, welcher durch die Vorrichtung, insbesondere durch das wenigstens eine Bauelement der Vorrichtung, von einer Umgebung der Vorrichtung insgesamt abgetrennt beziehungsweise abgegrenzt ist. Insbesondere ist die Vorrichtung ein Modul, das heißt eine für sich alleine betrachtet hergestellte und somit abgeschlossene oder zusammenhängende Baueinheit, welche als Ganzes und somit in zusammengebautem Zustand transportierbar und somit bewegbar ist, insbesondere beispielsweise relativ zu dem zuvor genannten Gebäude, in welchem die Vorrichtung insbesondere während des Herstellens des jeweiligen Bauteils angeordnet sein kann. Das zuvor genannte, die Prozesskammer als ein Raum zumindest teilweise, insbesondere überwiegend oder vollständig, begrenzende und hierdurch beispielsweise die Prozesskammer zumindest teilweise, insbesondere zumindest überwiegend oder vollständig, von der Umgebung abgrenzende Bauelement ist beispielsweise eine Haube oder ein Gehäuse der Vorrichtung.

Der Erfindung liegen insbesondere die folgenden Erkenntnisse zugrunde: Bauteile, die in einem oder mithilfe eines Pulverbetts additiv hergestellt werden, lassen sich im Allgemeinen nur sehr schwer von Pulverresten beziehungsweise von überschüssigem Pulver befreien. Unter dem jeweiligen Pulverrest beziehungsweise unter überschüssigem Pulver ist insbesondere ein solcher Teil des das Pulverbett bildenden Pulvers zu verstehen, der nicht zum Herstellen des Bauteils verwendet wird beziehungsweise der nicht Bestandteil des Bauteils und demzufolge nicht zu einer Schicht zum Herstellen des Bauteils verwendet wird. Somit werden beispielsweise Partikel, welche den Pulverrest bilden, nicht miteinander verbunden und somit nicht zum Herstellen einer Schicht zum Herstellen des Bauteils verwendet, sodass beispielsweise die den Pulverrest bildenden Partikel im Rahmen des Herstellen des Bauteils nicht miteinander verbunden werden und somit beispielsweise auch nach der Herstellung des Bauteils lose sind oder bleiben. Pulverreste können insbesondere nicht oder nur sehr schwierig aus Hohlräumen entfernt werden, welche im Rahmen der Herstellung des jeweiligen Bauteils hergestellt werden, da sich die Pulverreste in solchen Hohlräumen sammeln und somit befinden können. Sind diese Hohlräume von außen, das heißt, von außerhalb des Bauteils, insbesondere nach dessen Herstellung, zugänglich, müssen der jeweilige Pulverrest und somit die den jeweiligen Pulverrest bildenden Partikel durch entsprechende Öffnungen, welche beispielsweise einerseits in die Hohlräume und andererseits an oder in die Umgebung des Bauteils münden, ausgetragen, das heißt aus den Hohlräumen entfernt werden. Dies erfolgt im Allgemeinen manuell und mit einem entsprechend hohen Zeitaufwand. Grundsätzlich ist es denkbar, automatische Maschinen zu verwenden, um Pulverreste, insbesondere von dem hergestellten Bauteil zu entfernen. Ein solches Entfernen von Pulverresten, insbesondere von dem hergestellten Bauteil, wird auch als Pulverentfernung oder Entpulverung bezeichnet. Sind die Hohlräume jedoch nach außen hin, das heißt zu einer Umgebung des fertig hergestellten Bauteils hin geschlossen, so können etwaige, in den Hohlräumen aufgenommene Pulverreste nach der Herstellung des jeweiligen Bauteils nicht aus den Hohlräumen entfernt werden. Dies kann dazu führen, dass sich in einem Hohlraum eines durch additive Fertigung fertig hergestellten Bauteils ein Pulverrest befindet, was zu einem unerwünscht und unnötig hohen Gewicht des Bauteils führen kann.

Die zuvor genannten Probleme und Nachteile können nun durch die Erfindung vermieden werden, da das Bauteil durch die sich während der Herstellung des Bauteils in der Prozesskammer befindende Saugeinrichtung während der Herstellung des jeweiligen Bauteils entpulvert werden kann. Vorzugsweise ist die Saugeinrichtung Bestandteil der auch als additive Fertigungsanlage bezeichneten Vorrichtung und somit Bestandteil der zuvor genannten Baueinheit. Da die Saugeinrichtung in der Prozesskammer angeordnet ist, kann eine Absaugung von Pulverresten bereits während der Herstellung des Bauteils und somit während des auch als Herstellungsprozess bezeichneten, additiven Fertigungsverfahrens erfolgen. Wird somit beispielsweise im Zuge der Herstellung des Bauteils wenigstens eine auch als Hohlraum bezeichnete Kavität des Bauteils hergestellt, so ist es möglich, diese Kavität beispielsweise vor einem Endgültigen Verschluss der Kavität von Pulver zu befreien. Hierzu wird ein etwaig in der Kavität vor deren endgültiger Verschließung und insbesondere vor endgültiger Fertigstellung des Bauteils enthaltener Pulverrest durch die Saugeinrichtung aus der Kavität gesaugt beziehungsweise abgesaugt. Hierfür kann eine einzige kleine Öffnung ausreichen, um über die Öffnung ein in der Kavität aufgenommener Pulverrest durch die Saugeinrichtung aus der Kavität abzusaugen, bevor die Kavität beziehungsweise die Öffnung verschlossen wird und bevor das Bauteil fertig hergestellt wird.

Nachdem der Pulverrest aus der Kavität abgesaugt wurde, wird beispielsweise, insbesondere unter Ausbildung des beziehungsweise eines weiteren Pulverbetts, Pulver auf die Plattform und somit auf die Öffnung aufgetragen. Da die Öffnung sehr klein ist, kann das auf die Öffnung aufgebrachte Pulver nicht durch die Öffnung hindurchdringen und in die darunterliegende Kavität vordringen oder ein nur sehr geringer und zu vernachlässigender Teil des auf die Öffnung aufgebrachten Pulvers kann in die Öffnung eindringen und gegebenenfalls durchdringen und somit in die darunter liegende Kavität eindringen. Somit ist es möglich, die Kavität zumindest nahezu vollständig von Pulverresten zu befreien, sodass beispielsweise nach vollständiger beziehungsweise fertiger Herstellung des Bauteils zumindest nahezu kein Pulver mehr in der Kavität aufgenommen ist.

Auch Hohlräume beziehungsweise Kavitäten, die in fertig hergestelltem Zustand des Bauteils, das heißt nach dessen Herstellung nach außen hin offen sind, jedoch eine komplizierte Geometrie aufweisen, können durch die erfindungsgemäße Vorrichtung während der Herstellung des Bauteils entpulvert werden. Dadurch ist es insbesondere möglich, diese Hohlräume zumindest weitgehend von Pulver und somit von Pulverresten zu befreien. Selbst wenn bei der Herstellung von weiteren Lagen oder Schichten im Pulverbett wieder ein Teil der Hohlräume mit Pulver ausgefüllt wird, erzeugt dies für eine anschließende Entpulverung einen Vorteil, da dann Pulver in den Hohlraum nur locker vorhanden ist und nicht verdichtet wurde. Dadurch kann die Entpulverung besonders einfach und gründlich durchgeführt werden.

Als besonders vorteilhaft hat es sich gezeigt, wenn die Saugeinrichtung einen wenigstens zwei gelenkig miteinander verbundene Armteile aufweisenden Gelenkarm und einen an dem Gelenkarm gehaltenen und zum Absaugen zumindest des Teils des pulverförmigen Ausgangsmaterials ausgebildeten Saugkopf aufweist, welcher durch den Gelenkarm in der Prozesskammer relativ zu der Plattform, insbesondere frei, bewegbar ist. Vorzugsweise weist der Saugkopf wenigstens eine oder mehrere Saugöffnungen auf, wobei über die Saugöffnung überschüssiges Pulver beziehungsweise ein Pulverrest und somit zumindest der Teil des pulverförmigen Ausgangsmaterials in den Saugkopf eingesaugt und somit von der Plattform und insbesondere von dem Bauteil abgesaugt werden kann. Durch den Gelenkarm kann der Saugkopf besonders bedarfsgerecht relativ zu der Plattform und somit relativ zu dem insbesondere noch nicht vollständig hergestellten Bauteil bewegt werden, sodass das Bauteil besonders vorteilhaft sowie zeit- und kostengünstig entpulvert werden kann.

Insbesondere ist ein Antrieb, insbesondere ein elektrischer Antrieb oder elektromotorischer Antrieb, vorgesehen, durch welchen die Armteile relativ zueinander und der Gelenkarm und somit der Saugkopf relativ zu der Plattform bewegt werden können. Hierdurch kann eine besonders flexible beziehungsweise bedarfsgerechte und umfangreiche Bewegung des Saugkopfes, insbesondere relativ zu der Plattform und somit relativ zu dem Bauteil, erreicht werden.

Dabei hat es sich als besonders vorteilhaft gezeigt, wenn der Gelenkarm dazu ausgebildet ist, den Saugkopf in drei senkrecht zueinander verlaufende und auch als Achsen bezeichnende Richtungen relativ zu der Plattform translatorisch zu bewegen. Dadurch können der Saugkopf und somit die Saugöffnung besonders bedarfsgerecht relativ zu dem insbesondere noch nicht vollständig hergestellten Bauteil positioniert werden, sodass das Bauteil besonders vorteilhaft und insbesondere besonders zeit- und kostengünstig entpulvert werden kann.

Um den Saugkopf besonders bedarfsgerecht und flexibel relativ zu der Plattform und relativ zu dem Bauteil ausrichten zu können, ist es in weiterer Ausgestaltung der Erfindung vorgesehen, dass der Gelenkarm dazu ausgebildet ist, den Saugkopf um wenigstens eine der Richtungen beziehungsweise Achsen relativ zu der Plattform rotatorisch zu bewegen, das heißt zu drehen.

Eine weitere Ausführungsform zeichnet sich dadurch aus, dass die Prozesskammer durch ein Gehäuseelement der Vorrichtung zumindest teilweise, insbesondere zumindest überwiegend und somit zu mehr als zur Hälfte oder vollständig, begrenzt ist. Das Gehäuseelement ist beispielsweise das zuvor genannte Bauelement beziehungsweise die zuvor genannte Haube oder das zuvor genannte Gehäuse der Vorrichtung.

Dabei hat es sich als besonders vorteilhaft gezeigt, wenn der Gelenkarm an dem Gehäuseelement gehalten ist. Hierdurch kann das Bauteil besonders vorteilhaft entpulvert werden, insbesondere von einer der Plattform und somit dem Bauteil gegenüberliegenden Seite aus.

Bei einer besonders vorteilhaften Ausführungsform der Erfindung ist die Plattform entlang einer Bewegungsrichtung relativ zu dem Gehäuseelement translatorisch bewegbar. Insbesondere kann die Plattform relativ zu dem Gehäuseelement, insbesondere in vertikaler Richtung nach unten, abgesenkt werden. Die jeweilige Schicht, welche auf die beschriebene Weise hergestellt wird, weist, insbesondere nach ihrer Herstellung, eine beispielsweise entlang der Bewegungsrichtung verlaufende und auch als Schichtdicke bezeichnete Dicke auf. Dabei ist es vorzugsweise vorgesehen, dass die Plattform nach dem Herstellen der Schicht einen Weg entlang der Bewegungsrichtung relativ zu dem Gehäuseelement bewegt und dabei vorzugsweise abgesenkt wird, wobei der Weg der Schichtdicke entspricht. Daraufhin kann weiteres Pulver, insbesondere unter Ausbildung des oder eines weiteren Pulverbetts, auf die Plattform aufgebracht werden, sodass aus diesem weiteren Pulver eine weitere Schicht, insbesondere zumindest teilweise aus der ersten Schicht, hergestellt werden kann.

Dabei hat es sich als besonders vorteilhaft gezeigt, wenn der Gelenkarm an einer Wandung des Gehäuseelements gehalten ist. Dabei ist durch die Wandung die Prozesskammer in eine parallel zu der Bewegungsrichtung verlaufende und von der Plattform wegweisende Begrenzungsrichtung zumindest teilweise, insbesondere zumindest überwiegend oder vollständig, begrenzt. Alternativ ist durch die Wandung die Prozesskammer in eine senkrecht zu der Bewegungsrichtung verlaufende und von der Plattform wegweisende Begrenzungsrichtung zumindest teilweise, insbesondere zumindest überwiegend oder vollständig, begrenzt. Die Wandung ist somit beispielsweise eine der Plattform gegenüberliegende Decke, durch welche die Prozesskammer beispielsweise in vertikaler Richtung nach oben hin begrenzt ist. Alternativ kann die Wandung eine Seitenwand sein, durch welche die Prozesskammer seitlich begrenzt ist.

Die Plattform weist beispielsweise eine Oberfläche auf, welche sich in einer Ebene erstreckt, welche zumindest im Wesentlich senkrecht zur Bewegungsrichtung verläuft. Dabei kann das Pulver unter Ausbildung des Pulverbetts auf der Oberfläche angeordnet werden. Beispielsweise verläuft die Begrenzungsrichtung senkrecht zu der Ebene und somit senkrecht zu der Oberfläche und weist dabei von der Oberfläche weg, oder die Begrenzungsrichtung verläuft parallel zu der Ebene.

Die Saugeinrichtung weist beispielsweise ein auch als Ventilator bezeichnetes Gebläse auf, durch welches Luft und somit zumindest der Teil des pulverförmigen Ausgangsmaterials beziehungsweise der Pulverrest gefördert werden können. Dabei ist es denkbar, dass das Gebläse an dem Gelenkarm, insbesondere an dem Saugkopf, gehalten ist, oder aber der Gelenkarm und der Saugkopf sind relativ zu dem Gebläse bewegbar, wobei es alternativ oder zusätzlich vorgesehen sein kann, dass das Gebläse relativ zu dem Gehäuseelement unbeweglich ist. Dadurch kann eine besonders vorteilhafte Saugleistung zur Entpulverung des Bauteils realisiert werden.

Bei einer besonders vorteilhaften Ausführungsform der Erfindung weist die Saugeinrichtung wenigstens einen zumindest teilweise in der Plattform, das heißt innerhalb der Plattform verlaufenden Absaugkanal auf, welcher die Plattform vorzugsweise, insbesondere vollständig, durchdringt. Insbesondere kann vorgesehen sein, dass der Saugkanal die zuvor genannte Oberfläche der Plattform durchdringt. Über den Absaugkanal kann zumindest der Teil des pulverförmigen Ausgangsmaterials durch die Saugeinrichtung von der Plattform abgesaugt werden. Hierbei ist es insbesondere möglich, über den Absaugkanal das Pulver in vertikaler Richtung nach unten und somit beispielsweise auf eine der Oberfläche abgewandte Rückseite der Plattform zu fördern, wodurch das Bauteil besonders vorteilhaft sowie besonders bauraum- und kostengünstig entpulvert werden kann.

Um dabei eine besonders vorteilhafte Entpulverung des Bauteils bei beziehungsweise während dessen Herstellung realisieren zu können, ist es in weiterer Ausgestaltung der Erfindung vorgesehen, dass die Saugeinrichtung wenigstens eine separat von der Plattform ausgebildete Saugleitung aufweist. Die Saugleitung begrenzt oder bildet wenigstens einen zweiten Saugkanal. Außerdem ist die Saugleitung mechanisch mit der Plattform verbunden und dadurch mit der Plattform, insbesondere entlang der Bewegungsrichtung und/oder relativ zu dem Gehäuseelement, mitbewegbar. Dabei ist der zweite Saugkanal fluidisch mit dem ersten Saugkanal verbunden, sodass über die Saugkanäle zumindest der Teil des pulverförmigen Ausgangsmaterials durch die Saugeinrichtung von der Plattform abgesaugt werden kann.

Das zuvor genannte Gebläse ist beispielsweise eine Pumpe, insbesondere eine Vakuumpumpe, durch welche das überschüssige Pulver besonders gut abgesaugt werden kann. Insbesondere kann das Gebläse beziehungsweise die Pumpe das überschüssige Pulver von der Plattform zunächst in den ersten Saugkanal einsaugen und in der Folge durch den ersten Saugkanal hindurchfördern und dadurch von dem ersten Saugkanal in den zweiten Saugkanal fördern. Das Gebläse beziehungsweise die Pumpe kann dann das überschüssige Pulver durch den zweiten Saugkanal hindurchfördern und somit von der Plattform wegfördern.

Beispielsweise weist die Saugeinrichtung ein auch als Behälter oder Auffangbehälter bezeichnetes Behältnis auf, in welchem das überschüssige und von der Plattform abgesaugte Pulver aufgenommen beziehungsweise aufgefangen werden kann. Hierdurch kann beispielsweise das abgesaugte Pulver wiederverwendet werden, um aus dem abgesaugten Pulver ein weiteres Bauteil additiv herzustellen.

Ein zweiter Aspekt der Erfindung betrifft ein Verfahren zur additiven Fertigung wenigstens eines Bauteils durch eine Vorrichtung, welche ein Prozesskammer und eine Plattform aufweist. Bei dem Verfahren wird auf der Plattform in der Prozesskammer ein Pulverbett aus einem pulverförmigen Ausgangsmaterial ausgebildet, wobei das Bauteil aus dem pulverförmigen Ausgangsmaterial hergestellt wird.

Des Weiteren ist es bei dem Verfahren vorgesehen, dass durch eine während der Herstellung des Bauteils in der Prozesskammer angeordnete Saugeinrichtung während der Herstellung des Bauteils zumindest ein Teil des das Pulverbett bildenden pulverförmigen Ausgangsmaterials, insbesondere von der Plattform, abgesaugt wird. Unter dem Merkmal, dass durch die Saugeinrichtung zumindest der Teil des das Pulverbett bildenden pulverförmigen Ausgangsmaterials abgesaugt wird, ist insbesondere zu verstehen, dass zumindest der Teil des pulverförmigen Ausgangsmaterials nicht notwendigerweise dann von der Plattform abgesaugt wird, während das Pulver beziehungsweise der Teil das Pulverbett bildet, sondern durch die Saugeinrichtung wird zumindest ein Teil beziehungsweise zumindest der Teil des Pulvers abgesaugt, welches zur Bildung des Pulverbetts verwendet wird beziehungsweise wurde. Insbesondere wird durch die Saugeinrichtung zumindest der Teil des pulverförmigen Ausgangsmaterials von der Plattform abgesaugt, nachdem aus zumindest einem weiteren Teil des das Pulverbett bildenden pulverförmigen Ausgangsmaterials eine Schicht, insbesondere auf die beschriebene Weise, hergestellt wurde. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweiligen angegeben Kombination, sondern auch in anderen Kombinationen oder in Alleinstellung verwendbar, ohne den Rahmen der Erfindung zu verlassen.

Die Zeichnung zeigt in:
- FIG 1: eine schematische und teilweise geschnittene Seitenansicht einer erfindungsgemäßen Vorrichtung gemäß einer ersten Ausführungsform zur additiven Fertigung wenigstens eines Bauteils; und
- FIG 2: ausschnittsweise eine schematische und geschnittene Seitenansicht der Vorrichtung gemäß einer zweiten Ausführungsform.

In den Figuren sind gleiche oder funktionsgleiche Elemente mit gleichen Bezugszeichen versehen.

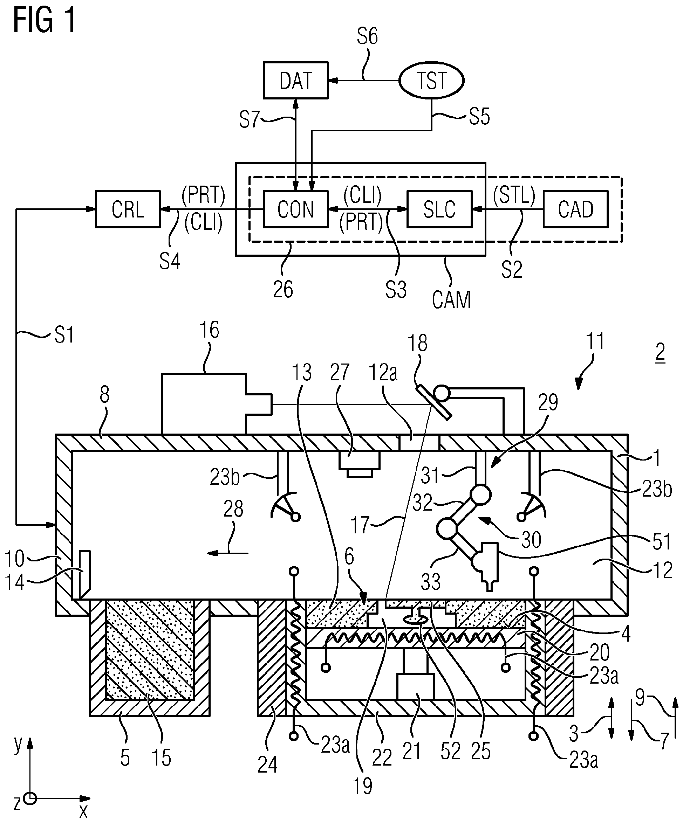

FIG 1 zeigt in einer schematischen und teilweise geschnittenen Seitenansicht einer auch als Anlage bezeichnete Vorrichtung 11 zur additiven Fertigung wenigstens eines auch als Werkstück bezeichneten Bauteils 19. Dies bedeutet, dass die Vorrichtung 11 zum Durchführen eines additiven Fertigungsverfahrens ausgebildet ist, durch welches das Bauteil 19, insbesondere schichtweise, hergestellt wird. Insbesondere ist das additive Fertigungsverfahren ein pulverbettbasiertes Fertigungsverfahren, wie im Folgenden noch genauer erläutert wird. Vorzugsweise handelt es sich bei dem additiven Fertigungsverfahren um ein Laserschmelzen, insbesondere um ein selektives Laserschmelzen (SLM - selective laser melting). Die Vorrichtung 11 weist eine Prozesskammer 12 auf, welche durch ein auch als Bauelement oder Gehäuse bezeichnetes Gehäuseelement 1 der Vorrichtung 11 zumindest teilweise, insbesondere zumindest überwiegend, begrenzt und hierdurch gegen eine die Vorrichtung 11 insgesamt umgebende Umgebung 2 zumindest teilweise, insbesondere zumindest überwiegend oder vollständig, abgetrennt oder getrennt ist. Das Gehäuseelement 1 wird auch als Haube bezeichnet. Während der Herstellung des Bauteils 19 herrscht in der Prozesskammer 12 beispielsweise eine Schutzgasatmosphäre, welche sich von einer in der Umgebung 2 herrschenden Atmosphäre unterscheidet. Hierdurch können beispielsweise während der Herstellung des Bauteils 19 durch sauerstoffbewirkte, unerwünschte Beeinflussungen oder Beeinträchtigungen der Herstellung des Bauteils 19 vermieden werden.

Die Vorrichtung 11 weist außerdem ein auch als Tisch oder Bauplattform bezeichnete Plattform 20 auf, welche entlang einer in FIG 1 durch einen Doppelpfeil 3 veranschaulichten Bewegungsrichtung relativ zu dem Gehäuseelement 1 translatorisch bewegbar ist beziehungsweise bewegt wird. Dabei kann die Prozesskammer 12 teilweise durch die Plattform 20 begrenzt sein. Die Plattform 20 weist eine der Prozesskammer 12 zugewandte Oberfläche 4 auf, welche sich in einer Ebene erstreckt, welche senkrecht zur Bewegungsrichtung verläuft. Dabei wird das Bauteil 19 auf der Oberfläche 4 und somit auf der Plattform 20 hergestellt. Das Gehäuseelement 1 und somit die Prozesskammer 12 weisen ein Fenster 12a auf, dessen Funktion im Folgenden noch näher erläutert wird.

Auf der Plattform 20, insbesondere auf der Oberfläche 4, ist beziehungsweise wird, insbesondere bei dem Fertigungsverfahren, wenigstens ein Pulverbett 13 aus einem pulverförmigen Ausgangsmaterial ausbildbar beziehungsweise ausgebildet, das heißt hergestellt, wobei das pulverförmige Ausgangsmaterial auch einfach als Pulver bezeichnet wird und durch, insbesondere lose und somit nicht miteinander verbundene Partikel, gebildet ist. Dabei wird das Bauteil 19 aus dem Pulver und somit mithilfe des Pulverbetts 13 oder in dem Pulverbett 13 hergestellt. Um das Pulverbett 13 auf der Plattform 20 auszubilden beziehungsweise herzustellen, wird eine Verteilungseinrichtung 14 verwendet. Bei dem in FIG 1 gezeigten Ausführungsbeispiel wird als die Verteilungseinrichtung 14 eine Rakel verwendet. Die Verteilungseinrichtung 14 wird beispielsweise entlang einer senkrecht zu der Bewegungsrichtung verlaufenden Verteilungsrichtung relativ zu dem Gehäuseelement 1 bewegt, wodurch das Pulverbett 13 auf der Plattform 20 hergestellt wird. Die Vorrichtung 11 weist dabei einen auch als Vorratsbehälter bezeichneten Bevorratungsbehälter 5 auf, in welchem das Pulver, aus welchem das Pulverbett 13 hergestellt wird, bevorratet ist. Das in dem Bevorratungsbehälter 5 aufgenommene Pulver wird auch als Pulvervorrat 15 bezeichnet. Dabei wird die Verteilungseinrichtung 14 über den Bevorratungsbehälter 5 und somit über den Pulvervorrat 15 hinwegbewegt, sodass zumindest ein Teil des Pulvervorrats 15 aus dem Bevorratungsbehälter 5 durch die Verteilungseinrichtung 14 auf die Plattform 20 bewegt und auf der Plattform 20 verteilt wird. Hierdurch wird das Pulverbett 13 hergestellt. Insbesondere wird hierdurch eine dünne Schicht aus Pulver auf der Plattform 20 gebildet, wobei diese dünne Schicht die oberste Lage 25 des Pulverbetts 13 bildet.

Aus FIG 1 ist erkennbar, dass das Pulverbett 13 aus dem Pulver in einem Aufnahmebereich 6 hergestellt wird. Der Aufnahmebereich 6 wird in der senkrecht zu der Bewegungsrichtung verlaufenden Ebene durch ein beispielsweise zumindest im Wesentlichen topförmiges Gehäuse 22 der Vorrichtung 11 begrenzt. In einer parallel zu der Bewegungsrichtung verlaufende und von der Prozesskammer 12 wegweisende sowie in Fig. 1 durch einen Pfeil 7 veranschaulichte Begrenzungsrichtung wird der Aufnahmebereich 6 durch die Plattform 20, insbesondere durch deren Oberfläche 4, begrenzt. Die Vorrichtung 11 weist einen der Plattform 20 zugeordneten Aktor 21 auf, durch welchen die Plattform 20 entlang der Bewegungsrichtung relativ zu dem Gehäuseelement 1 und relativ zu dem Gehäuse 22 bewegbar ist beziehungsweise bewegt wird.

Des Weiteren ist eine vorliegend als Laser 16 ausgebildete Energiequelle vorgesehen, welche Bestandteil der Vorrichtung 11 sein kann. Der Laser 16 ist dazu ausgebildet, einen vorliegend als Laserstrahl 17 ausgebildeten Energiestrahl bereitzustellen beziehungsweise zu erzeugen. Der von dem Laser 16 bereitgestellte Laserstrahl 17 wird durch eine optische Umlenkvorrichtung, insbesondere durch wenigstens einen Spiegel 18 der optischen Umlenkvorrichtung, abgelenkt, derart, dass der außerhalb der Prozesskammer 12, außerhalb des Gehäuseelements 1 und vorzugsweise in der Umgebung 2 von dem Laser 16 bereitgestellte Laserstrahl 17 von außerhalb der Prozesskammer 12 und dabei von außerhalb des Gehäuseelements 1 durch das Fenster 12a hindurch in die Prozesskammer 12 gelangt. Hierdurch wird zumindest ein Teil des Pulverbetts 13 mit dem Laserstrahl 17 innerhalb der Prozesskammer 12 beaufschlagt, das heißt bestrahlt und dadurch erwärmt. Beispielsweise wird der Laserstrahl 17, insbesondere durch den Spiegel 18, derart relativ zu der Plattform 20 und somit relativ zu dem Pulverbett 13 bewegt, sodass zumindest ein Teil des Pulverbetts 13 und somit zumindest ein Teil der das Pulverbett 13 bildenden und zunächst losen, das heißt noch nicht miteinander verbundenen Partikel des pulverförmigen Ausgangsmaterials mit dem Laserstrahl 17 beaufschlagt und dadurch erwärmt und in der Folge miteinander verbunden werden. Die das Pulverbett 13 bildenden Partikel werden an einem Auftreffpunkt, an welchem der Laserstrahl 17 auf die das Pulverbett 13 bildenden Partikel auftrifft, auf- beziehungsweise angeschmolzen und dadurch miteinander verbunden. Hierdurch wird aus den Partikeln, die erwärmt und dadurch miteinander verbunden werden, eine Schicht auf der Plattform 20 hergestellt, wobei das Bauteil 19 aus der Schicht hergestellt wird. Die Schicht wird im Folgenden auch als erste Schicht bezeichnet und weist beispielsweise eine entlang der Bewegungsrichtung verlaufende und auch als Schichtdicke bezeichnete Dicke auf.

Nach dem Herstellen der Schicht wird die Plattform 20 beispielsweise durch den Aktor 21 entlang der Bewegungsrichtung und dabei beispielsweise in vertikaler Richtung nach unten bewegt und dabei abgesenkt. Mit anderen Worten wird die Plattform 20 entlang der Bewegungsrichtung von dem Gehäuseelement 1 wegbewegt. Beispielsweise wird die Plattform 20 um einen Weg abgesenkt, welche der auch als Pulverlagendicke bezeichneten Schichtdicke entspricht. Daraufhin wird beispielsweise auf der Plattform 20 und auf der ersten Schicht ein weiteres Pulverbett 13 aus Pulver aus dem Bevorratungsbehälter 5 auf die beschriebene Weise hergestellt, woraufhin aus zumindest einem Teil des weiteren Pulverbetts auf die beschriebene Weise eine zweite Schicht hergestellt wird. Die zweite Schicht ist zumindest teilweise, insbesondere entlang der Bewegungsrichtung, auf der ersten Schicht angeordnet und wird mit der ersten Schicht verbunden. Dabei wird das Bauteil 19 aus den Schichten hergestellt, sodass das Bauteil Schicht für Schicht, das heißt schichtweise hergestellt wird. Insgesamt ist erkennbar, dass das Bauteil 19 pulverbettbasiert hergestellt wird. Somit wird im Rahmen der Herstellung des Bauteils 19 die Plattform 20 schrittweise um die jeweilige Schichtdicke durch den Aktor 21 abgesenkt und dabei beispielsweise in das Gehäuse 22 hineinbewegt.

In dem Gehäuse 22 und/oder in der Plattform 20 kann jeweils wenigstens ein oder mehrere Heizeinrichtungen 23a angeordnet sein, durch welche das Gehäuse 22 beziehungsweise die Plattform 20 beheizt beziehungsweise erwärmt werden kann. Die Heizeinrichtung 23a ist vorliegend als eine elektrische Widerstandsheizung ausgebildet. Alternativ ist es denkbar, dass die Heizeinrichtung 23a als eine Induktionsspule ausgebildet ist. Durch die Heizeinrichtung 23a können das in Entstehung befindliche Bauteil 19 sowie die das Pulverbett 13 bildenden Partikel vorgewärmt beziehungsweise warmgehalten werden. Alternativ oder zusätzlich kann die Vorrichtung 11 wenigstens einen oder mehrere Heizeinrichtungen 23b umfassen, welche beispielsweise als Strahler, insbesondere Infrarotstrahler, ausgebildet sein können. Die jeweilige Heizeinrichtung 23b ist vorzugsweise in der Prozesskammer 12 angeordnet. Die jeweilige Heizeinrichtung 23b kann beispielsweise insbesondere dann, wenn sie als ein Strahler, insbesondere als ein Infrarotstrahler, ausgebildet ist, Wärmestrahlung bereitstellen, durch welche das Pulverbett 13, insbesondere dessen Oberfläche, erwärmt werden kann. Hierzu wird das Pulverbett 13, insbesondere dessen Oberfläche, mit der Wärmestrahlung bestrahlt.

Um das Pulverbett 13 und/oder das Bauteil 19 besonders energiegünstig erwärmen beziehungsweise warmhalten oder vorwärmen zu können, befindet sich an dem Gehäuse 22, insbesondere auf einer dem Aufnahmebereich 6 abgewandten Außenseite des Gehäuses 22, eine Isolation 24 mit geringer thermischer Leitfähigkeit. Vorzugsweise ist es vorgesehen, dass das Gehäuseelement 1 zumindest mittelbar mit dem Bevorratungsbehälter 5 und/oder mit dem Gehäuse 22 verbunden und zumindest mittelbar gegen den Bevorratungsbehälter 5 und/oder gegen das Gehäuse 22 abgedichtet ist, sodass beispielsweise in der Prozesskammer 12 besonders vorteilhaft eine Schutzgasatmosphäre geschaffen werden kann.

Die Vorrichtung 11 kann darüber hinaus eine Wärmebildkamera 27 umfassen, durch welche eine Temperatur des Pulverbetts 13, insbesondere dessen Oberfläche, ermittelt werden kann, um beispielsweise in einem Bedarfsfall die Heizleistung der Heizeinrichtungen 23a, 23b einzustellen beziehungsweise anzupassen. Alternativ oder zusätzlich zu der Wärmebildkamera 27 kann wenigstens ein oder mehrere Temperatursensoren verwendet werden, um eine Temperatur des Pulverbetts 13, insbesondere dessen Oberfläche, zu verwenden. Der Temperatursensor ist beispielsweise an dem Pulverbett 13 und/oder an dem Gehäuse 22 und/oder an der Plattform 20 angeordnet beziehungsweise gehalten.

Aus FIG 1 ist besonders gut erkennbar, dass das Gehäuseelement 1 eine erste Wandung in Form einer Decke 8 aufweist. Die Prozesskammer 12 ist dabei in eine parallel zur Bewegungsrichtung verlaufende und in FIG 1 durch einen Pfeil 9 veranschaulichte erste Begrenzungsrichtung zumindest teilweise, insbesondere zumindest überwiegend oder vollständig, durch die Decke 8 begrenzt. Außerdem weist das Gehäuseelement 1 wenigstens eine zweite Wand in Form einer Seitenwand 10 auf, wobei die Prozesskammer 12 in der senkrecht zu der Bewegungsrichtung verlaufenden Ebene zumindest teilweise, insbesondere zumindest überwiegend oder vollständig, durch die Seitenwand 10 begrenzt ist. Insbesondere ist die Prozesskammer 12 in eine senkrecht zur Bewegungsrichtung und senkrecht zu der Begrenzungsrichtung verlaufende und in FIG 1 durch einen Pfeil 28 veranschaulichte zweite Begrenzungsrichtung durch die Seitenwand 10 zumindest teilweise, insbesondere zumindest überwiegend oder vollständig, begrenzt. Die durch den Pfeil 9 veranschaulichte erste Begrenzungsrichtung weist beispielsweise von der Plattform 20 weg. Alternativ oder zusätzlich weist die durch den Pfeil 28 veranschaulichte zweite Begrenzungsrichtung von der Plattform 20 weg.

Die Vorrichtung 11 wird über eine erste Schnittstelle S1 durch eine Steuereinrichtung CRL betrieben, insbesondere kontrolliert, gesteuert oder geregelt. Hierzu wird die Steuereinrichtung CRL vorher mit geeigneten Prozessdaten versorgt. Hierzu dient ein Computerprogrammprodukt 26, welches mehrere Programmmodule umfassen kann. Zur Vorbereitung der Herstellung des Bauteils 19 ist es vorzugsweise vorgesehen, in einem Konstruktionsprogrammmodul CAD dreidimensionale Geometriedaten des Bauteils 19 zu erstellen. Ein so erstellter Geometriedatensatz STL, welcher beispielsweise in einer auch als STL-File bezeichneten STL-Datei gespeichert ist oder durch eine solche STL-Datei charakterisiert wird, wird über eine zweite Schnittstelle S2 an ein System TAM zur Fertigungsvorbereitung übergeben. Auf dem System TAM zur Fertigungsvorbereitung sind ein Erstellungsprogrammmodul TON und ein Transformationsprogrammmodul SLC installiert. Das Erstellungsprogrammmodul CUN und das Transformationsprogrammmodul SLC kommunizieren über eine dritte Schnittstelle S3 miteinander. In dem Transformationsprogrammmodul SLC wird der auch als Konstruktionsdatensatz bezeichnete Geometriedatensatz STL, welcher von dem Transformationsprogrammmodul SLC über die zweite Schnittstelle S2 empfangen wird, in einen Fertigungsdatensatz CLI umgewandelt. Der Fertigungsdatensatz CLI ist beispielsweise in einer auch CLI-File bezeichneten CLI-Datei gespeichert beziehungsweise wird durch eine solche CLI-Datei charakterisiert. Der Fertigungsdatensatz CLI beschreibt das Bauteil 19 in den herzustellenden, als auch Lagen bezeichneten Schichten. Dieser Transformationsprozess wird auch als slicen bezeichnet. Außerdem werden von dem Erstellungsprogrammmodul CON Verfahrensparameter PRT festgelegt, die auch die Erstellung des Fertigungsdatensatzes CLI beeinflussen und mit diesem über eine vierte Schnittstelle S4 an die auch als Steuerung bezeichnete Steuereinrichtung CRL übergeben werden. Hierbei handelt es sich um Fertigungsparameter, die von der auch als Steuerung bezeichnete Steuereinrichtung CRL in Maschinenbefehle für die Vorrichtung 11 (Anlage) umgesetzt werden können.

Das Erstellungsprogrammmodul CON berücksichtigt bei der Bestimmung der Verfahrensparameter PRT auch Erkenntnisse, die im Rahmen von Testverfahren TST durch Untersuchung von vormals additiv hergestellten Proben durch Vierpunkt-Biegeversuche ermittelt wurden. Hierbei handelt es sich für einen bestimmten Legierungstyp beispielsweise um BDTT, die bei bestimmten Verfahrensparametern des additiven Fertigungsverfahrens mit den hergestellten Vierpunkt-Biegeproben ermittelt wurden. Diese können dem Erstellungsprogrammmodul CON über eine Schnittstelle S5 zur Verfügung gestellt werden. Gleichzeitig können diese Testergebnisse über eine Schnittstelle S6 einer Datenbank DAT zur Verfügung gestellt werden. Die Datenbank DAT ist über eine Schnittstelle S7 ebenfalls mit dem Erstellungsprogrammmodul CON verbunden, sodass auf einmal erstellte Messergebnisse und die zugehörigen Verfahrensparameter und Legierungszusammensetzungen BDTT zurückgegriffen werden kann und nicht bei jedem Bauteil erneute Untersuchen erforderlich sind.

Der Laserstrahl 17 wird beispielsweise, insbesondere durch den Spiegel 18, mit einer auch als Scangeschwindigkeit bezeichneten Geschwindigkeit über das Pulverbett 13 beziehungsweise relativ zu dem Pulverbett 13 dabei entlang des Pulverbetts 13 bewegt. Es kann mit einer Scangeschwindigkeit des Laserstrahls 17 von mindestens 500 mm/s und höchstens 2000 mm/s, bevorzugt von mindestens 800 mm/s und höchstens 1200 mm/s, gearbeitet werden. Vorzugsweise weist der Laser 16 eine auch Laserleistung bezeichnete Leistung auf, welche mindestens 125 W und höchstens 250 W, bevorzugt mindestens 150 W und höchstens 250 W, beträgt. Ferner ist denkbar, dass mit einem Spurabstand von mindestens 60 und höchstens 130 pm, bevorzugt von mindestens 80 und höchstens 120 µm, gearbeitet wird. Alternativ oder zusätzlich kann vorgesehen sein, dass mit einer Schichtdicke der Pulverlagen von mindestens 20 µm und höchstens 50 µm gearbeitet wird. Mit anderen Worten ist es vorzugsweise vorgesehen, dass die auch als Pulverlagendicke bezeichnete Schichtdicke mindestens 20 µm und höchstens 50 µm beträgt.

Das Pulver, insbesondere dessen Partikel, weist beziehungsweise weisen eine Korngröße auf, welche vorzugsweise mindestens 10 µm und höchsten 45 µm beträgt. Dabei ist es vorzugsweise vorgesehen, dass eine Größenverteilung D50 mindestens 17 µm und höchstens 27 µm beträgt. Dies bedeutet, dass 50% der Partikel kleiner als 17 beziehungsweise 27 µm sind. Pulver mit einer derartigen Größenverteilung von D50 von 17 bis 27 µm lassen sich besonders gut durch pulverbettbasierte additive Fertigungsverfahren verarbeiten, da sich solche Pulver besonders zuverlässig und einfach dosieren lassen, um das Pulverbett 13 herzustellen.

Die Vorrichtung 11 weist darüber hinaus eine Saugeinrichtung 29 auf, welche während der Herstellung des Bauteils 19 in der Prozesskammer 12 angeordnet ist. Somit ist beispielsweise die Saugeinrichtung 29 während der Herstellung des Bauteils 19 in der zuvor genannten Schutzgasatmosphäre angeordnet beziehungsweise von der Schutzgasatmosphäre und somit von einem die Schutzgasatmosphäre bildenden Schutzgas umgeben. Durch die Saugeinrichtung 29 ist beziehungsweise wird während der Herstellung des Bauteils 19 zumindest ein Teil des Pulvers, welches das Pulverbett 13 bildet beziehungsweise gebildet hat, von der Plattform 20 absaugbar beziehungsweise abgesaugt. Dabei zeigt FIG 1 eine erste Ausführungsform. Bei der ersten Ausführungsform umfasst die Saugeinrichtung 29 einen vorliegend als Roboterarm ausgebildeten oder auch als Roboterarm bezeichneten Gelenkarm 30, welcher wenigstens zwei und vorliegend wenigstens oder genau drei gelenkig miteinander verbundene Armteile 31, 32 und 33 aufweist. Der Roboterarm ist über den Armteil 31 an dem Gehäuseelement 1 und dabei an der Decke 8 gehalten, wobei beispielsweise der Armteil 31 relativ zu dem Gehäuseelement 1 bewegbar, insbesondere rotatorisch und/oder translatorisch bewegbar, sein kann. Insbesondere sind die Armteile 31, 32 und 33 gelenkig miteinander verbunden und dadurch relativ zueinander, insbesondere translatorisch und/oder rotatorisch, bewegbar. Die Saugeinrichtung 29 kann dabei einen in FIG 1 nicht näher dargestellten und vorzugsweise elektromotorischen Antrieb umfassen, welcher beispielsweise in den Gelenkarm 30 integriert ist. Durch den Antrieb können die Armteile 31, 32 und 33 relativ zueinander bewegt werden. Dabei ist der Armteil 33 über den Armteil 32 an dem Armteil 31 gehalten, sodass der Armteil 32 bezogen auf einen Kraftfluss, welcher von dem Gehäuseelement 1 über die Armteile 31 und 32 zu dem Armteil 33 verläuft, stromab des Armteils 31 und stromab des Armteils 33 angeordnet ist.

Die Saugeinrichtung 29 umfasst darüber hinaus einen an dem Gelenkarm 30 und dabei an dem Armteil 33 gehaltenen Saugkopf 51, durch welchen zumindest der zuvor genannte Teil des Pulvers, welches das Pulverbett 13 bildet beziehungsweise gebildet hat, von der Plattform 20 abgesaugt werden kann. Der Teil des Pulvers beziehungsweise das Pulver, der beziehungsweise das durch die Saugeinrichtung 29 von der Plattform 20 abgesaugt wird, wird auch als Pulverrest oder überschüssiges Pulver bezeichnet. Die Saugeinrichtung 29 ermöglicht es insbesondere, das überschüssige Pulver von dem Bauteil 19 insbesondere aus einem auch als Kavität bezeichneten Hohlraum des Bauteils 19 abzusaugen, bevor das Bauteil 19 vollständig hergestellt ist und somit bevor der Hohlraum vollständig verschlossen ist beziehungsweise wird.

Aus FIG 1 ist erkennbar, dass der Saugkopf 51 ein Endeffektor, insbesondere des Gelenkarms 30, ist, da der Saugkopf 51 über den Armteil 33 an dem Armteil 32 gehalten ist. Durch den Gelenkarm 30 ist der Saugkopf 51 innerhalb der Prozesskammer 12, insbesondere zumindest nahezu frei, bewegbar. Vorzugsweise ist es vorgesehen, dass der Gelenkarm 30 dazu ausgebildet ist, den Saugkopf 51 in drei senkrecht zueinander verlaufende Richtungen x, y und z relativ zu der Plattform 20 und relativ zu dem Gehäuseelement 1 zu bewegen. Ferner ist der Gelenkarm 30 vorzugsweise dazu ausgebildet, den Saugkopf 51 um wenigstens eine der Richtungen x, y und z relativ zu der Plattform 20 und relativ zu dem Gehäuseelement 1 zu bewegen. Der Saugkopf 51 kann durch den Gelenkarm 30 und durch den Antrieb zu einer oder in die Nähe einer Kavität 52 des noch nicht vollständig hergestellten Bauteils 19 bewegt beziehungsweise geführt werden. Aus FIG 1 ist erkennbar, dass die Kavität 52 mit Pulver, welches das Pulverbett 13 bildet, ausgefüllt ist. Wird beispielsweise die aktuelle Lage 25 zumindest teilweise aufgeschmolzen, sodass aus der aktuellen Lage 25 eine Schicht zum Herstellen des Bauteils 19 hergestellt wird, so wird durch die Schicht, die aus der Lage 25 hergestellt wird, die Kavität 52 weitgehend jedoch nicht vollständig verschlossen. Insbesondere wird die Kavität 52 derart verschlossen, dass wenigstens eine Öffnung existiert, die einenends in die Kavität 52 und anderenends in die Prozesskammer 12 mündet. Hiernach kann das sich in der Kavität 52 befindende Pulver durch die Saugeinrichtung 29 und dabei über den Saugkopf 51 aus der Kavität 52 abgesaugt werden, sodass die Kavität 52 zumindest nahezu vollständig von Pulver befreit werden kann. Dies wird auch als Entpulverung des Bauteils 19 bezeichnet. Dies bedeutet, dass es mithilfe der Saugeinrichtung 29 möglich ist, auch solche Kavitäten zu entpulvern, welche im fertig hergestellten Bauteil 19 nicht mehr durch eine Verbindung nach außen, das heißt an eine Umgebung des Bauteils 19 zugänglich sind.

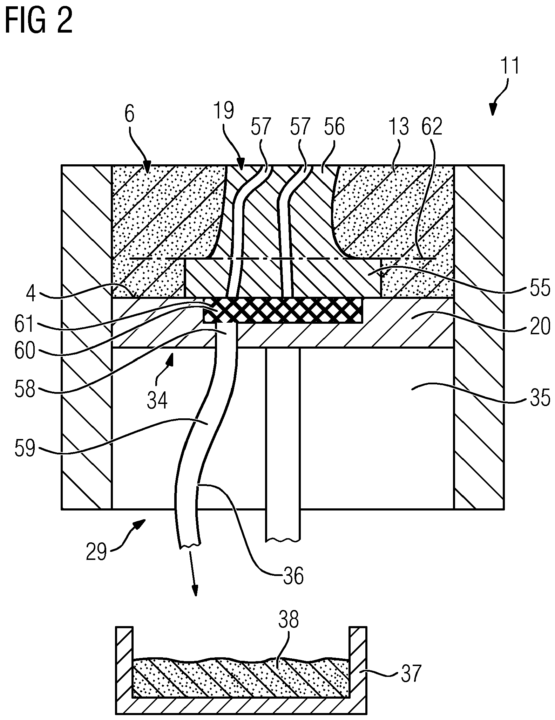

FIG 2 zeigt eine zweite Ausführungsform der Vorrichtung 11. Dabei wird das Bauteil 19 als eine Turbinenschaufel hergestellt, welche einen Schaufelfuß 55 wenigstens oder genau ein Blatt 56 aufweist. Als Kavitäten weist das Bauteil 19 Kühlluftkanäle 57 auf, welche durch die Saugeinrichtung 29 besonders vorteilhaft entpulvert werden können.

Bei der zweiten Ausführungsform kann die Entpulverung der Kavitäten über die Plattform 20 selbst erfolgen. Zu diesem Zweck weist die Saugeinrichtung 29 wenigstens einen auch als Anschluss oder Vakuumanschluss bezeichneten Saugkanal 58 auf, welcher die Plattform 20, vorzugsweise vollständig, durchdringt. Dabei durchdringt der Saugkanal 58 insbesondere die Oberfläche 4, sodass der Saugkanal 58, insbesondere entlang der Bewegungsrichtung, einerseits in den Aufnahmebereich 6 mündet. Dabei ist die Oberfläche 4 dem Aufnahmebereich 6 zugewandt. Andererseits mündet der Saugkanal 58 an sich in einen dem Aufnahmebereich 6 entlang der Bewegungsrichtung abgewandten und auf einer der Oberfläche 4 abgewandten Rückseite 34 der Plattform 20 angeordneten Bereich 35, insbesondere in dem Gehäuse 22. Über den auch als Absaugkanal bezeichneten Saugkanal 58 kann das überschüssige Pulver durch die Saugeinrichtung 29 von der Plattform 20 abgesaugt werden. Dies bedeutet, dass mithilfe des Saugkanals 58 das überschüssige Pulver von Seiten des Aufnahmebereichs 6 beziehungsweise der Oberfläche 4 zu dem Bereich 35 und somit auf der Rückseite 34 gesaugt und somit gefördert werden kann.

Dabei weist die Saugeinrichtung 29 wenigstens eine separat von der Plattform 20 ausgebildete Saugleitung 36 auf, welche einen zweiten Saugkanal 59 bildet beziehungsweise begrenzt. Der Saugkanal 59 wird auch als zweiter Absaugkanal bezeichnet. Beispielsweise ist die Saugleitung 36 als ein Schlauch ausgebildet. Die Saugleitung 36 ist mechanisch mit der Plattform 20 verbunden und somit entlang der Bewegungsrichtung mit der Plattform 20 mitbewegbar. Wieder mit anderen Worten ausgedrückt ist an den Saugkanal 58 die Saugleitung 36 angeschlossen, insbesondere derart, dass die Saugkanäle 58 und 59 fluidisch miteinander verbunden sind.

Die Plattform 20 weist außerdem einen nach oben beziehungsweise in Richtung des Aufnahmebereichs 6 offenen Hohlraum 60 auf, welcher mit einem Verstärkungsgitter 61 versehen ist. Dies bedeutet beispielsweise, dass das Verstärkungsgitter 61 in dem Hohlraum 60 der Plattform 20 angeordnet ist. Dabei stützt das Verstärkungsgitter 61 den Schaufelfuß 55. Der Schaufelfuß 55 ist nicht additiv gefertigt, sondern wird als vorgefertigtes Bauelement auf die Plattform 20 und dabei zumindest teilweise auf das Stützgitter 61 aufgelegt. Beispielsweise wird das Blatt 56 durch das additive Fertigungsverfahren additiv gefertigt, sodass beispielsweise bezogen auf den Schaufelfuß 55 und das Blatt 56 ausschließlich das Blatt 56 additiv und dabei durch die Vorrichtung 11 hergestellt wird.

Insgesamt ist erkennbar, dass durch die Saugeinrichtung 29 überschüssiges Pulver aus den Kühlluftkanälen 57 über das Verstärkungsgitter 61 in den Saugkanal 58 hineingesaugt und somit durch den Saugkanal 58 hindurchgefördert werden kann. Die Saugeinrichtung 29 kann das überschüssige Pulver aus dem Saugkanal 58 und Saugkanal 59 fördern und durch den Saugkanal 59 hindurchfördern.

Dabei weist die Saugeinrichtung 29 ein auch als Auffangbehälter bezeichnetes Behältnis 37 auf, in welchem das überschüssige und in FIG 2 mit 38 bezeichnete Pulver, welches durch die Saugeinrichtung 29 von der Plattform 20 abgesaugt wird und vorher zumindest ein Teil des Pulverbetts 13 bildet beziehungsweise gebildet hat, aufgefangen und insbesondere aufgenommen wird. Außerdem ist in FIG 2 eine Trennung zwischen dem Schaufelfuß 55 und der Schaufel 56 durch eine Strichpunktlinie 62 angedeutet. Mit anderen Worten veranschaulicht die Strichpunktlinie 62 eine Trennebene, in welcher der Schaufelfuß 55 mit dem additiv hergestellten oder herzustellenden Blatt 56, welches auch als Schaufelblatt oder Schaufel bezeichnet wird, verbunden ist beziehungsweise wird.

### Bezugszeichenliste

- 1: Gehäuseelement
- 2: Umgebung
- 3: Doppelpfeil
- 4: Oberfläche
- 5: Bevorratungsbehälter
- 6: Aufnahmebereich
- 7: Pfeil
- 8: Decke
- 9: Pfeil
- 10: Seitenwand
- 11: Vorrichtung
- 12: Prozesskammer
- 12a: Fenster
- 13: Pulverbett
- 14: Verteilungseinrichtung
- 15: Pulvervorrat
- 16: Laser
- 17: Laserstrahl
- 18: Spiegel
- 19: Bauteil
- 20: Plattform
- 21: Aktor
- 22: Gehäuse
- 23a: Heizeinrichtung
- 23b: Heizeinrichtung
- 24: Isolation
- 25: Lage
- 26: Computerprogrammprodukt
- 27: Wärmebildkamera
- 28: Pfeil
- 29: Saugeinrichtung
- 30: Gelenkarm
- 31: Armteil
- 32: Armteil
- 33: Armteil
- 34: Rückseite
- 35: Bereich
- 36: Saugleitung
- 37: Behältnis
- 38: überschüssiges Pulver
- 51: Saugkopf
- 52: Kavität
- 55: Schaufelfuß
- 56: Blatt
- 57: Kühlluftkanal
- 58: Saugkanal
- 59: Saugkanal
- 60: Hohlraum
- 61: Verstärkungsgitter
- S1: Schnittstelle
- S2: Schnittstelle
- S3: Schnittstelle
- S4: Schnittstelle
- S5: Schnittstelle
- S6: Schnittstelle
- S7: Schnittstelle
- X: Richtung
- Y: Richtung
- Z: Richtung
- CRL: Steuereinrichtung
- CON: Erstellungsprogrammmodul
- SLC: Transformationsprogrammmodul
- CAD: Konstruktionsprogrammmodul
- CAM: System
- TST: Testverfahren
- DAT: Datenbank
- CLI: Fertigungsdatensatz
- BRT: Verfahrensparameter
- STL: Konstruktionsdatensatz

## Patentansprüche

1. Vorrichtung (11) zur additiven Fertigung von Bauteilen (19), mit einer Prozesskammer (12), mit einer Plattform (20), auf welcher in der Prozesskammer (12) ein Pulverbett (13) aus einem pulverförmigen Ausgangsmaterial (15) zum Herstellen des jeweiligen Bauteils (19) ausbildbar ist, und mit einer in der Prozesskammer (12) angeordneten Saugeinrichtung (29), durch welche während des Herstellens des jeweiligen Bauteils (19) zumindest ein Teil (38) des das Pulverbett (13) bildenden pulverförmigen Ausgangsmaterials (15) von der Plattform (20) absaugbar ist.

2. Vorrichtung (11) nach Anspruch 1,
wobei die Saugeinrichtung (29) einen wenigstens zwei gelenkig miteinander verbundene Armteile (31, 32, 33) aufweisenden Gelenkarm (30) und einen an dem Gelenkarm (30) gehaltenen und zum Absaugen zumindest des Teils (38) des pulverförmigen Ausgangsmaterials (15) ausgebildeten Saugkopf (51) aufweist, welcher durch den Gelenkarm (30) in der Prozesskammer (12) relativ zu der Plattform (20) bewegbar ist.

3. Vorrichtung (11) nach Anspruch 2,
wobei der Gelenkarm (30) dazu ausgebildet ist, den Saugkopf (51) in drei senkrecht zueinander verlaufende Richtungen (x, y, z) relativ zu der Plattform (20) translatorisch zu bewegen.

4. Vorrichtung (11) nach Anspruch 3,
wobei der Gelenkarm (30) dazu ausgebildet ist, den Saugkopf (51) um wenigstens eine der Richtungen (x, y, z) relativ zu der Plattform (20) rotatorisch zu bewegen.

5. Vorrichtung (11) nach einem der vorhergehenden Ansprüche
wobei die Prozesskammer (12) durch ein Gehäuseelement (1) der Vorrichtung (11) zumindest teilweise begrenzt ist.

6. Vorrichtung (11) nach Anspruch 5 und einem der Ansprüche 2 bis 4,
wobei der Gelenkarm (30) an dem Gehäuseelement (1) gehalten ist.

7. Vorrichtung (11) nach Anspruch 6,
wobei die Plattform (20) entlang einer Bewegungsrichtung (3) relativ zu dem Gehäuseelement (1) translatorisch bewegbar ist, wobei der Gelenkarm (30) an einer Wandung (8, 10) des Gehäuseelements (1) gehalten ist, und wobei:
- durch die Wandung (8) die Prozesskammer (12) in eine parallel zu der Bewegungsrichtung (3) verlaufende und von der Plattform (20) wegweisende Begrenzungsrichtung (9) zumindest teilweise begrenzt ist; oder
- durch die Wandung (10) die Prozesskammer (12) in eine senkrecht zu der Bewegungsrichtung (3) verlaufende und von der Plattform (20) wegweisende Begrenzungsrichtung (28) zumindest teilweise begrenzt ist.

8. Vorrichtung (11) nach einem der vorhergehenden Ansprüche,
wobei die Saugeinrichtung (29) wenigstens einen zumindest teilweise in der Plattform (20) verlaufenden, insbesondere die Plattform (20) durchdringenden, Absaugkanal (58) aufweist, über welchen zumindest der Teil (38) des pulverförmigen Ausgangsmaterials (15) durch die Saugeinrichtung (29) von der Plattform (20) absaugbar ist.

9. Vorrichtung (11) nach Anspruch 8,
wobei die Saugeinrichtung (29) wenigstens eine separat von der Plattform (20) ausgebildete und wenigstens einen zweiten Saugkanal (59) begrenzende Saugleitung (36) aufweist, welche mechanisch mit der Plattform (20) verbunden und dadurch mit der Plattform (20) mitbewegbar ist, wobei der zweite Saugkanal (59) fluidisch mit dem ersten Saugkanal (58) verbunden ist, sodass über die Saugkanäle (58, 59) zumindest der Teil (38) des pulverförmigen Ausgangsmaterials (15) durch die Saugeinrichtung (29) von der Plattform (20) absaugbar ist.

10. Verfahren zur additiven Fertigung wenigstens eines Bauteiles (19) durch eine eine Prozesskammer (12) und eine Plattform (20) aufweisende Vorrichtung (11), wobei auf der Plattform (20) in der Prozesskammer (12) ein Pulverbett (13) aus einem pulverförmigen Ausgangsmaterial (15) ausgebildet wird, aus welchem das Bauteil (19) hergestellt wird, und wobei durch eine während der Herstellung des Bauteils (19) in der Prozesskammer (12) angeordnete Saugeinrichtung (29) während der Herstellung des Bauteils (19) zumindest ein Teil des das Pulverbett (13) bildenden pulverförmigen Ausgangsmaterials (15) von der Plattform (20) abgesaugt wird.
